# EUROPEAN PATENT APPLICATION

(11) **EP 4 606 476 A1**
(43) Date of publication of application: **27.08.2025**
(21) Application number: 24158651.0
(22) Date of filing: 20.02.2024
(51) Int. Cl.: B01J 23/28, B01J 23/46, B01J 23/72, B01J 23/74, B01J 23/755, B01J 27/185, B01J 37/03, B01J 37/04, B01J 37/08, B01J 37/30

(54) **PROCESS FOR PREPARING A METAL PHOSPHIDE, THE SO-OBTAINED METAL PHOSPHIDE AND THE USE THEREOF**

(71) Applicant: Studiengesellschaft Kohle gGmbH, 45470 Mülheim (DE)
(72) Inventor: NEUMANN, Constanze, 45470 Mülheim (DE); KARAM, Leila, 45470 Mülheim (DE)

(57) **Abstract**

The present invention refers to a process for preparing a metal phosphide, the so-obtained metal phosphide and the use thereof.

## Description

The present invention refers to a process for preparing a metal phosphide, the so-obtained metal phosphide and the use thereof.

To bring about a hydrogen-based economy that lightens society's impact on the environment, efficient catalysts are needed for the production and catalytic conversion of H₂ that are based on cheap and abundant raw materials. Noble metal catalysts still set the benchmark for the production of H₂ via electrochemical water splitting and its utilization in hydrogenation reactions, but their supply is insufficient to decarbonize the entire chemical value chain.

Catalysts that contain noble metal nanoparticles can leverage decades of research on the precision synthesis of noble metal nanostructures, their interaction with supports, and surface ligand speciation, so that synthetic advances are required to level the playing field for non-noble metal-based catalysts and render them increasingly competitive. A notable inherent difference between noble metals such as palladium and more abundant metals such as nickel is the comparatively high stability of the metallic oxidation state, which protects the surface of noble metal catalysts from inactivation via oxide formation.

According to the considerations of the inventors, incorporation of phosphorus into transition metal frameworks should introduce strong, partially covalent M-P bonds that lower the d-band center and shift the Fermi level relative to that of the metal. Based on knowledge in the field it was the inventor's application idea that phosphorus introduction tunes the binding affinities of the metal surface towards key adsorbates such as hydrogen, while also allowing for cooperative hydrogen splitting with an ionic contribution to the mechanism. According to the inventors, the presence of P in the structure furthermore creates small metal ensembles, which is crucial in selective hydrogenation catalysis. Computational studies place the performance of metal phosphides for H₂ production or conversion on par with noble metals, but experimental catalytic data time and again show superior performance for noble-metal based catalysts.

The present inventors were motivated by the hypothesis that much of the discrepancy may result from the fact that noble-metal-based catalysts bear much closer resemblance to the idealized computational structures than those based on metal phosphides, which are plagued by low dispersion on the support and extensive surface oxidation.

The traditional synthesis strategy for metal phosphides involves the reduction of the corresponding phosphates at high temperatures (>700 °C), which commonly leads to the formation of large polydisperse metal phosphides. The use of highly reactive phosphorus sources, such as P₄ or PH₃, added directly or generated in situ, permit a reduction in the synthesis temperature to 150 °C, or even 35 °C in the case of P(SiMe₃)₃. However, P₄ and P(SiMe₃)₃ are pyrophoric, and P(SiMe₃)₃ hydrolyzes upon contact with moisture to release PH₃ gas, which can prove lethal after 10 min exposure to < 10 ppm.

Pre-formed metal organic complexes can also be used as single source precursors for the formation of well-defined metal phosphides at moderate temperatures, which is a more costly approach that is particularly appealing for the controlled synthesis of bimetallic phosphides. Over the last two decades, methods for the preparation of small metal phosphide nanoparticles at reasonable temperatures (< 300 °C) from non-toxic precursors via colloidal synthesis have been developed.

While control over the size, shape, and structure of colloidal particles can be achieved, effective general strategies for secure anchoring of the nanoparticles on high surface area supports with high dispersion are still lacking. Moreover, for <5 nm non-noble metal phosphide nanoparticles, irrespective of synthetic route, high dispersion has only been shown for specialized supports, such as mesoporous silica prepared in the course of the synthesis

A general process that furnishes high dispersions of small metal phosphide nanoparticles for a variety of commercially available support materials has not been achieved in the prior art and thus, there is the need for such a process.

The reduced oxidative stability of metal phosphide nanoparticles versus noble metal nanoparticles is another key challenge for the use of metal phosphides in many applications, especially in heterogeneous catalysis, which is inherently a surface process. Substrate molecules can only access the outermost layers of metal phosphide nanoparticles, which are readily oxidized to metal oxides and metal phosphates that are generally catalytically inactive.

Surprisingly; the present inventors have developed an exemplary process in which 3.2 nm Ni₂P nanoparticles highly dispersed over Al₂O₃ display can be obtained, said supported Ni₂P nanoparticles highly dispersed over Al₂O₃ showing a remarkable stability against oxidation and catalyze selective alkyne hydrogenation at a catalyst loading of 0.07 mol% with an efficiency comparable to the Pd-based benchmark catalyst. Consequently, the inventors have developed a 1-step process for preparing metal phosphides nanoparticles such as Ni₂P nanoparticles highly dispersed over a support such as Al₂O₃

Thus, the present invention is directed to a process for preparing a particulate metal phosphide on a support wherein, in a first step, a metal salt, selected from salts of an inorganic or organic acid or mixtures thereof, of a metal selected from Fe, Cu, Co, Ni, Mo, Ru or mixtures thereof, is heated under a protective gas atmosphere together with a phosphorous compound in the presence of a support material selected from carbon, silicon dioxide, zircon dioxide, titan dioxide, aluminum oxide and hydrated forms thereof as well as mixtures thereof, hydroxyapatite or mixtures thereof and in the presence of a C₁₀₋₂₂ hydrocarbon amine compound and an aliphatic, optionally unsaturated, hydrocarbon solvent, having a boiling point at 1 bar in the range of 300°C to 400°C, preferably with a heating rate of 10°C / min, to an elevated temperature of between 100°C to 200°C and kept at this temperature for a period of time of 30 min to 120 min, and then further heated, preferably with a heating rate of 5°C to 20°C / min, preferably 10°C / min, to an elevated temperature of between 200°C and 300°C and kept at this temperature for a period of time of 60 min to 180 min, cooled to a temperature range of 40°C to 80°C and kept, preferably under stirring, at this temperature for 8 to 12 hours, and wherein, in a further step, the precipitate is separated from the solvent and optionally washed with an non-polar organic solvent whereby the desired particulate metal phosphide on said support is obtained.

The generality of the inventive 1-step synthesis process is demonstrated by the preparation of Ni₂P/silica, Ni₂P/SBA-15, Ni₂P/Hydroxyapatite (HAP), Ni₂P/TiO₂, Ni₂P/C and Ni₂P/ZrO₂ as well as Co₂P/Al₂O₃, Co₂P/TiO₂ and NiCoP/TiO₂ with high dispersion from cheap and safe commercially available precursors.

In the inventive process, the phosphorous compound is preferably selected from triarylphosphites, trialkylphosphites, diaryl alkylphosphites, dialkyl aryl phosphites, triarylphosphines or mixtures thereof, and is preferably triphenylphosphite.

The metal salt may be selected from salts of an inorganic or organic acid or mixtures thereof, said acid preferably being selected from hydrochloric acid, nitric acid, acetic acid, sulfuric acid, hydrobromic acid or mixtures thereof, acetylacetonates, or mixtures thereof.

The C₁₀₋₂₂ hydrocarbon amine usablde in the imvetive process is preferably selected from hexadecylamine, oleylamine, octadecylamine, decylamine, dodecylamine, tetradecylamine or mixtures thereof.

The aliphatic, optionally unsaturated, hydrocarbon solvent, having a boiling point at 1 bar in the range of 250°C to 400°C is preferably selected from C₁₆ to C₂₀ aliphatic, optionally unsaturated, hydrocarbons, more preferably selected from 1-octadecene, 1-tetradecene, octadecan, eicosan or mixtures thereof.

The present invention is also directed to the particulate metal phosphide on a support, which is obtainable according to the inventive process, and the use thereof as catalyst in organic synthesis, in particular selective hydrogenation reactions such as the semi-hydrogenation of alkynes, electrochemical hydrogen evolution, hydrodeoxygenation and hydrodesulfurization, including reactions for which other supported metal phosphides have shown good performance in the literature.

The invention is further illustrated by the attached Figures and Examples. In the Figures, it is shown:
- Figure 1:: Synthesis of Ni₂P/supportₓ₋ₛₜₑₚ via three different preparation methods;
- Figure 2:: STEM-HAADF images and STEM-EDX elemental (Ti, Ni, P) mapping of
(a) Ni₂P/TiO_{2 3-step},
(b) Ni₂P/TiO_{2 2-step},
(c) Ni₂P/TiO_{2 1-step}
(d) STEM-HAADF images and STEM-EDX elemental (Ni, P) mapping of Ni₂P/TiO_{2 1-step} at higher magnification;
- Figure 3:: STEM-HAADF images and STEM-EDX elemental (Si, Ni, P) mapping for
(a) Ni₂P/SBA-15₃₋ₛₜₑₚ,
(b) Ni₂P/SBA-15₂₋ₛₜₑₚ,
(c) Ni₂P/SBA-15₁₋ₛₜₑₚ;
- Figure 4:: (a) PXRD patterns of Ni₂P/SBA-15 prepared by three different synthetic routes with the expected positions of reflections attributable to Ni₂P indicated by °.
(b) ³¹P-NMR of Ni₂P/SBA-15 ₁₋ₛₜₑₚ (WURST-CPMG pulse sequence)
(c) ³¹P-NMR of Ni₂P/Al₂O_{3 1-step} and Ni₂P/SBA-15 ₁₋ₛₜₑₚ (Hahn Echo). In all ³¹P-NMR spectra the positions corresponding to the two ³¹P environments in Ni₂P are marked with P1 and P2, while inorganic phosphates are marked with P3;
- Figure 5:: (a) Effect of different thermal or reductive pre-treatments on the subsequent performance of Ni₂P/Al₂O_{3 1-step} in catalytic semi-hydrogenation (red bars correspond to the 1-hexene fraction and brown bars to the hexane fraction that was obtained)
(b) Influence of the synthesis method and optimized reductive pre-treatment on catalytic performance of Ni₂P/Al₂O₃ in alkyne semi-hydrogenation.
(c) Particle size distribution, TEM image and P, Ni EDX mapping for Ni₂P/Al₂O_{3 1-step} after the reductive pre-treatment at 200 °C.
- Figure 6:: Alkyne semi-hydrogenation catalyzed by Ni₂P/Al₂O_{3 1-step}; and
- Figure 7:: Comparison of high resolution Ni 2p XP spectra of
(a) Ni₂P/Al₂O₃ prepared by different synthesis methods after storage for one month and;
(b) Ni₂P/Al₂O_{3 1-step} and Ni₂P/Al₂O_{3 2-step} after storage under air for one year before and after H₂ reduction at 200 °C.

For most of the preparation examples, the inventors chose preferably triphenylphosphite as a source of phosphorus due to its low toxicity, air-stability, and low price in combination with bench-stable and economical metal sources, such as nickel chloride hydrate. The inventors reasoned that P(OPh)₃ could be suitable for the formation of Ni₂P nanoparticles in the 2-4 nm size range because metal phosphide formation does not proceed via the intermediacy of nickel nanoparticles.

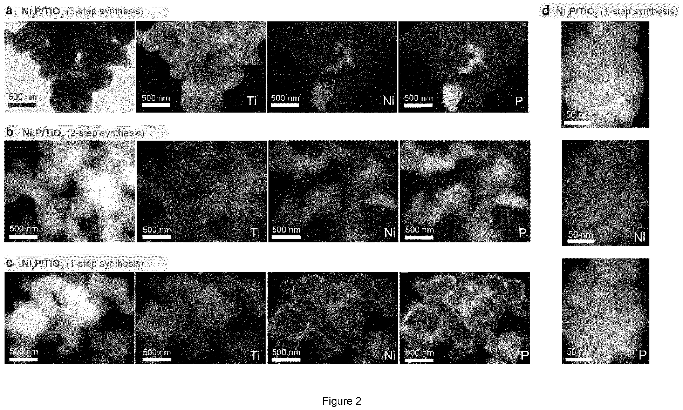

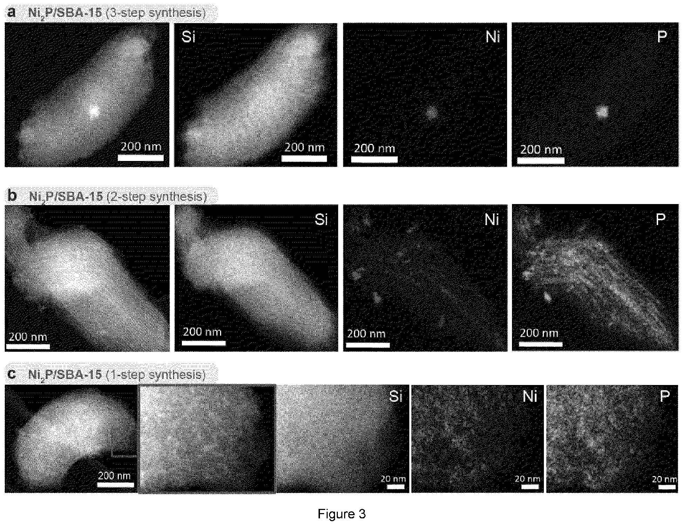

While isolated nanoparticles in the desired size range could be obtained, the initial attempts to synthesize supported catalysts by heterogenizing colloidally synthesized metal phosphides on commercially available support materials according to standard protocols led to unsatisfactory results. The synthetic route was lengthy, the final metal loadings not infrequently deviated from those targeted, and the dispersion of metal phosphide over the support remained poor. Optimization of the heterogenization of isolated Ni₂P nanoparticles led to a procedure in which the Ni₂P powder was suspended in hexane and sonicated for one hour prior to the addition of the support, but aggregation of Ni₂P was still observed. (Fig 2a, 3a,).

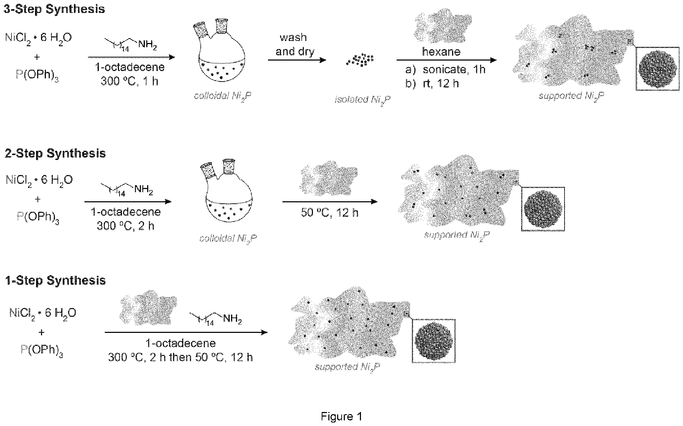

As shown in Figure 1, the 3-step route corresponds to the standard approach that involves preparation of colloidal Ni₂P nanoparticles, removal of the surface ligands that cap the nanoparticles, and finally heterogenization on a support material. For the 2-step route, the inventors added the support material directly to the colloidal suspension of the as-prepared Ni₂P nanoparticles, while the 1-step route involved addition of all reagents to the same flask at the start of the synthesis. The inventors found that the 1-step synthetic route consistently delivered substantially better dispersion of metal phosphide nanoparticles on the support surface as well as reproducible and predictable metal loadings with substantially smaller synthetic effort than the standard multi-step procedure (Fig. 2,3,). Acquisition of electron microscopy data over different length scales proved crucial to obtaining a complete picture of the dispersion as high magnification images regularly showed well-ordered areas that proved not to be representative for the sample when lower magnification elemental mapping was carried out.

As shown in Figure 2, STEM-HAADF images and STEM-EDX elemental (Ti, Ni, P) mapping of (a) Ni₂P/TiO_{2 3-step}, (b) Ni₂P/TiO_{2 2-step}, and (c) Ni₂P/TiO_{2 1-step} show increasing dispersion of Ni₂P as the synthetic route is expedited. (d) STEM-HAADF images and STEM-EDX elemental (Ni, P) mapping of Ni₂P/TiO_{2 1-step} show the results at higher magnification.

As illustrated in Figure 3, STEM-HAADF images and STEM-EDX elemental (Si, Ni, P) mapping are shown for (a) Ni₂P/SBA-15₃₋ₛₜₑₚ, (b) Ni₂P/SBA-15₂₋ₛₜₑₚ, (c) Ni₂P/SBA-15₁₋ₛₜₑₚ. for all samples prepared in the course of this work, only the desired metal phosphide phase (Ni₂P, Co₂P, NiCoP) was detected by PXRD analysis, and no evidence for the presence of metallic nanoparticles or undesired additional phosphide phases could be obtained .

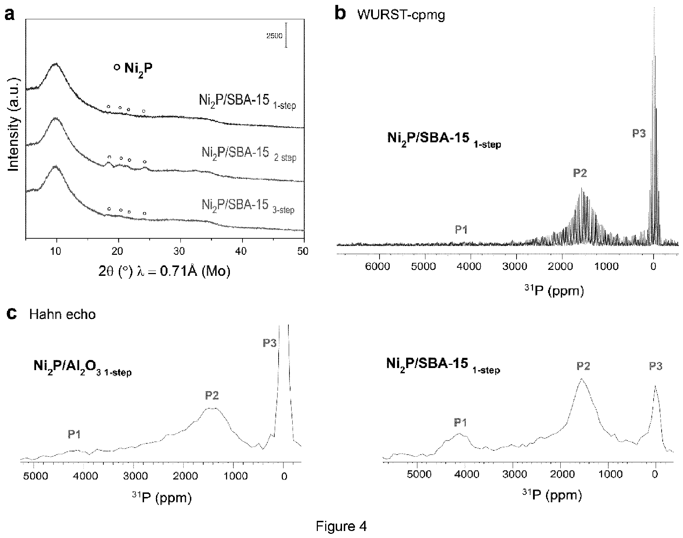

Referring to Figure 4, due to the small size of the Ni₂P nanoparticles, however, reflections in the diffraction patterns were in some cases barely discernable (Fig. 4a), so that the inventors turned to ³¹P NMR spectroscopy to collect additional evidence for the identity and phase purity of supported Ni₂P. The pronounced Knight shift observed for the metallic metal phosphide phases causes the ³¹P signals to be spread over a chemical shift range of >4000 ppm and different metal phosphide phases can be identified even if substantial broadening due to nanosizing is observed. The crystal structure of Ni₂P consists of alternating layers of Ni₃P₂ (P environment 1) and Ni₃P (P environment 2), so that two ³¹P resonances are expected that correspond to the two crystallographically distinct phosphorus environments: 4081 pm (P environment 1), and 1487 pm (P environment 2). Extremely fast relaxation in combination with substantial signal broadening caused by the small size of the supported Ni₂P nanoparticles rendered the detection of the expected signals challenging. In fact, only the signal corresponding to P environment 2 could be detected by the WURST-CPMG pulse sequence (Fig. 4b), while a Hahn echo pulse sequence had to be used to detect the faster relaxing signal for P environment 1 in the Ni₂P crystal structure (Fig. 4c). In addition to signals associated with Ni₂P, a signal around 0 ppm with a substantially longer relaxation time was detected, which corresponds primarily to inorganic phosphate species adsorbed on the support surface (vide infra).

To evaluate to what extent small, highly dispersed Ni₂P nanoparticles could be kinetically competitive with noble-metal catalysts, the inventors focused on alkyne semi-hydrogenation as a representative example of an important transformation for which noble metal catalysts represent the performance benchmark. The palladium-based Lindlar catalyst, 5 wt% Pd/CaCO₃, has been the mainstay in the selective hydrogenation of alkynes to alkenes in solution. The presence of a lead additive, which is needed to ensure selective olefin formation, is highly problematic, especially when chemicals for human use or consumption are targeted. In prior attempts to match the performance of the palladium-based Lindlar catalyst with a nickel catalyst, a 75 °C higher reaction temperature was required to achieve comparable reactivity under otherwise identical conditions. Furthermore, the nickel ensemble size in Ni₂P is reduced to a maximum of 3, which prevents the formation of oligomerization products for which two adjacent alkyne adsorption sites need to be present. Notably, precision synthesis of phosphine ligated copper nanoparticles via surface organometallic chemistry also yielded an efficient semi-hydrogenation catalyst that furnished a range of internal olefins in high selectivity. Direct comparison of the copper-based catalyst with the Lindlar catalyst resulted in complete reduction to alkanes for the latter, which indicates that the choice of reaction conditions were too forcing for the more reactive palladium-based catalyst. A number of other non-noble metal-based catalysts have also shown impressive levels of selectivity in semi-hydrogenation, but catalytic activities remain far from matching those of palladium-containing catalysts.

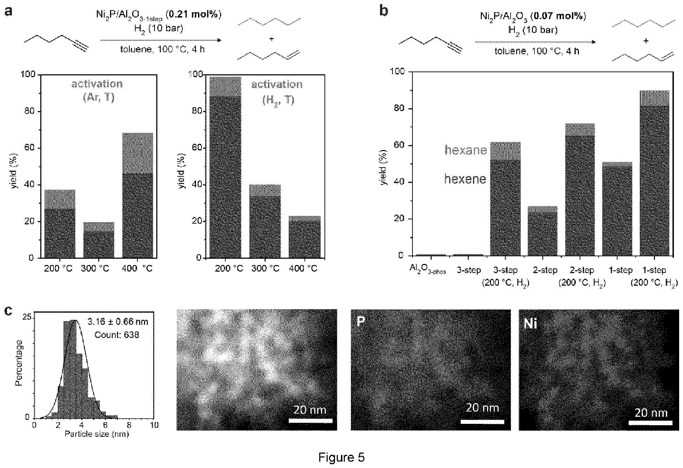

In the exploration of semi-hydrogenation catalysis with supported Ni₂P, initial test reactions indicated that alumina was the most suitable among the supports the inventors investigated, so that mainly results obtained with Ni₂P/Al₂O₃ will be discussed. Given the challenge of selective semi-hydrogenation of terminal alkynes, the inventors selected 1-hexyne as a model substrate for which the inventors initially evaluated the effect of different reductive thermal pre-treatments on the catalysts' semi-hydrogenation performance (Fig. 5a). A low temperature reductive pre-treatment (200 °C, H₂) proved highly beneficial to subsequent catalytic performance of Ni₂P/Al₂O_{3 1-step}, while an analogous pre-treatment under an inert atmosphere did not lead to a corresponding performance increase. Reductive pre-treatment of the catalysts at higher temperatures led to a decrease in catalytic activity, which the inventors attribute to the onset of sintering at reduction temperatures >200 °C. Following reduction at 200 °C, the average Ni₂P particle diameter was 3.2 nm (Fig. 5c), while reduction of Ni₂P/Al₂O_{3 1-step} at 400 °C led to an increase in the average particle size to 7.1 nm.

To evaluate the effect of the synthesis strategy in a systematic manner, the inventors compared the performance of as-synthesized as well as reduced Ni₂P/Al₂O₃ with a catalyst loading of only 0.07 mol%, to ensure that the conversion for all catalysts remained below 100% (Fig. 5b). Alumina support which had been subjected to the 1-step synthesis protocol in the absence of nickel (Al₂O₃₋ₚₕₒₛ, Fig. 5b), as well as 0.07 mol% unsupported Ni₂P nanoparticles furnished < 1% conversion under these conditions (Tab. S2-S5), which highlights that facile access to the Ni₂P surface is crucial for catalytic performance. Furthermore, < 2% conversion was obtained with as-synthesized Ni₂P/Al₂O₃ prepared via the 3-step route, while the conversion exceeded 50% for as-synthesized Ni₂P/Al₂O₃ prepared via the 1-step route (Fig. 5b). The optimized reductive pre-treatment enhanced the performance of all catalyst batches, but the increase in activity was particularly apparent for Ni₂P/Al₂O_{3 3-step}, which had been essentially inactive prior to reduction. The 1-step, 2-step and 3-step synthesis protocol for Ni₂P/Al₂O₃ all furnished phase-pure Ni₂P nanoparticles of comparable size, but the higher dispersion observed could readily account for the increased catalytic efficiency of Ni₂P/Al₂O_{3 1-step}. Ni₂P/Al₂O₃ prepared via the 2-step or 3-step synthesis are remarkably similar in terms of both particle diameter and dispersion (Fig. S44-S46, Tab. S6), suggesting that the different synthetic routes influence the nanoparticle surface chemistry in a manner which affects catalytic performance.

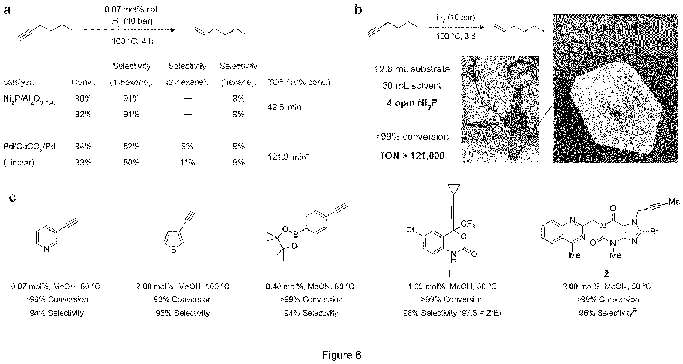

Prior to in-depth studies of the surface chemistry, however, the inventors decided to test if the performance of the Ni₂P/Al₂O_{3 1-step} catalyst could match that of the palladium-based Lindlar catalyst in terms of activity and accessible substrate scope. Gratifyingly, using identical reaction conditions and a catalyst loading of 0.07 mol%, the inventors obtained 90 ± 1% conversion for Ni₂P/Al₂O_{3 1-step}, while a commercially obtained sample of 5 wt% Pd Lindlar catalyst furnished 93.5 ± 0.5% conversion. A comparable degree of over-reduction to the alkane (9 ± 0% and 9 ± 0%) was obtained for both catalysts, while undesirable olefin isomerization (10 ± 1%) could only be detected for the Lindlar catalyst. The turnover frequency below 10% conversion was ~3 times higher for the palladium-based catalyst (TOF = 121.3 min⁻¹) compared to Ni₂P/Al₂O₃₋₁ₛₜₑₚ (TOF = 42.5 min⁻¹), but the time required to reach synthetically useful levels of conversion was almost identical. Thus, Ni₂P/Al₂O_{3 1-step} appears to have an initiation period during which the catalytic activity is lower. Semi-hydrogenation with Ni₂P/Al₂O_{3 1-step} can also be carried out in neat 1-hexyne, for which 87.5 ± 0.5% conversion and 88.5 ± 0.5% selectivity was achieved under identical conditions to those used in Fig. 6a. Investigation of the catalyst lifetime of Ni₂P/Al₂O_{3 1-step} furnished TON > 121,000 after a reaction time of 3 days, which shows that the nickel phosphide catalyst retained high activity throughout 72 h continuous operation. In fact, 1.0 mg Ni₂P/Al₂O_{3 1-step}, which corresponds to 50 µg Ni, was able to convert 12.8 mL 1-hexyne. Since the presence of strong coordination sites on the substrate increases the desorption barrier of the alkene product and renders over-hydrogenation to the alkane more likely, the inventors set out to test semi-hydrogenation of alkynes containing strongly coordinating pyridine or thiophene moieties. Alkynes bearing nitrogen-containing heterocycles were readily reduced to the corresponding alkenes, and even sulfur-containing heterocycles were tolerated (Fig. 6c). Aryl boronic esters, which have limited compatibility with Pd-based catalysts, proved unproblematic, and complex substrates, such as the anti-retroviral efavirenz 1, or polyheteroaromatic 2, a synthetic precursor of the diabetes type II drug linagliptin, could be efficiently converted. Both the aromatic chlorine substituent in 1, as well as the cyclopropyl ring located adjacent to the alkyne undergoing reduction are fully retained, and the olefin product is formed in a Z : E ratio of 97 : 3. A prior report demonstrated efficient semi-hydrogenation of 1 to the Z-olefin at room temperature, which relied on the use of 30 mol% Lindlar catalyst or polymer-supported Pd nanodendrites. The inventors are not aware of any prior report describing semi-hydrogenation of 2, for which full conversion and 96% olefin selectivity could be achieved with Ni₂P/Al₂O_{3 1-step}. While competitive hydrodebromination of the highly activated heteroaryl bromide in 2 was observed, the yield of the undesired side product could be reduced to 14% by lowering the reaction temperature to 50 °C. Analysis of Ni₂P/Al₂O_{3 1-step} after use in semi-hydrogenation catalysis for 96 h by electron microscopy revealed that the Ni₂P particle size remained small (3.0 ± 0.7 nm, Fig. S47, S48), while the Ni loading on the support material was unchanged, which is consistent with an absence of leaching and sintering.

As illustrated in Figure 6 (a), comparison of catalyst activity and selectivity with Pd-based Lindlar catalyst was carried out in duplicate, and the results of both runs are listed for each catalyst. Turnover frequencies (TOFs) were obtained in separate experiments in which the conversion of 1-hexyne was limited to 10%. In (b) 1.0 mg of Ni₂P/Al₂O_{3 1-step} (right picture) is sufficient for the semi-hydrogenation of 12.8 mL 1-hexyne inside a pressurized autoclave (left picture). In (c), the inventors list the loading of Ni₂P/Al₂O_{3 1-step}, the solvent, and the reaction temperature used for each substrate as well as the conversion and the selectivity for semi-hydrogenation that was observed. #6:1 ratio of brominated and hydrodebrominated olefin was obtained.

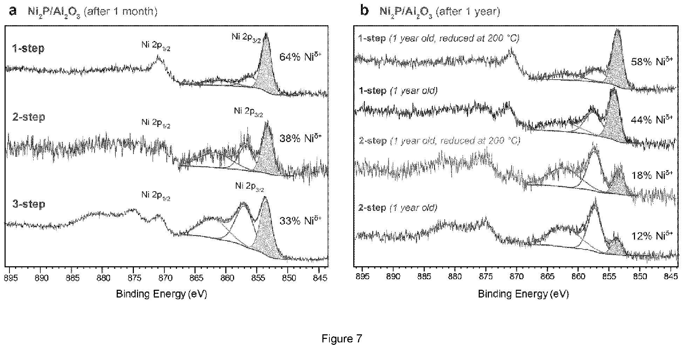

As shown in Figure 7, the comparison of high resolution Ni 2p XP spectra of (a) Ni₂P/Al₂O₃ prepared by different synthesis methods after storage for one month and;(b) Ni₂P/Al₂O_{3 1-step} and Ni₂P/Al₂O_{3 2-step} after storage under air for one year before and after H₂ reduction at 200 °C proves the surprising long term stability of the inventive material.

Having demonstrated that Ni₂P/Al₂O_{3 1-step} is a highly active and long-lived semi-hydrogenation catalyst that is applicable to complex substrates, the inventors turned their attention to rationalizing the substantial improvement in catalytic performance when Ni₂P/Al₂O₃ was prepared via the 1-step synthetic protocol. Crucial insight was obtained by comparison of Ni2p XPS data of 1-step, 2-step, and 3-step synthesized Ni₂P/Al₂O₃ that were collected after the materials had been exposed to air for a month (Fig. 7a). In all cases, three distinct peaks could be identified for Ni2p_{3/2} with binding energies of 853.6 eV, 857 eV and 862 eV, which correspond to the almost metallic nickel center in Ni₂P, Ni²⁺, and the satellite peak associated with Ni²⁺. Only around one third of the nickel surface and near-surface atoms remained in the metallic state for Ni₂P/Al₂O₃ prepared via either the 2-step or 3-step protocol, compared with two-thirds for Ni₂P/Al₂O₃ prepared via the 1-step synthesis. Even more notably, after 1 year of exposure to the atmosphere, 44% of the surface and near-surface atoms in Ni₂P/Al₂O_{3 1-step} were found to be reduced compared to 12% for Ni₂P/Al₂O_{3 2-step}. Based on empirical optimization, the catalytic protocol includes a mild reductive pre-treatment (1 bar H₂, 200 °C, 1 h; see Fig. 5a), which increased the fraction of reduced nickel atoms to 58% for 1-year old Ni₂P/Al₂O_{3 1-step} (Fig. 7b). Given the increased reactivity of the surface versus the bulk, substantial oxidation of metal phosphides is commonly detected by surface-sensitive techniques such as XPS even after fleeting air exposure. The air-stability of Ni₂P/Al₂O_{3 1-step}, on the other hand, more closely resembles that of Pd/Al₂O₃.

Efficient protection of the metal phosphide surface against oxidation is crucial for catalytic application, especially of small nanoparticles, due to the difficulty of regenerating the oxidized surface. Temperature programmed reduction shows that reduction of nickel phosphate to nickel phosphide takes place at ~700 °C, while the inventors had found that Ni₂P nanoparticles supported on alumina already undergo substantial sintering at 400 °C, which reduces catalytic performance by over 70% (Fig. 5a, Tab S3). On the other hand, 1.5-year-old Ni₂P/Al₂O_{3 1-step} still delivered 85% conversion in the semi-hydrogenation of 1-hexyne under conditions in which freshly synthesized catalyst afforded 99% conversion, even though no effort had been made to protect the catalyst from oxidation during storage. Ni₂P/Al₂O_{3 1-step} can thus be readily made and used in environments where a glovebox is not available.

### Experimental Part

### Synthesis procedures

All reagents other than the alumina support were used as received from chemical suppliers and no attempt was made to remove water or dissolved oxygen from liquid reagents prior to use in the synthesis. Commercial alumina was calcined at 500 °C for 5 h to remove traces of boehmite and achieve phase pure γ-alumina, which was verified by powder X-ray diffraction before use in the synthesis of supported metal phosphides.

### Procedure for the synthesis of Ni₂P/support₁₋ₛₜₑₚ

A stir bar was added to 250 mL three-neck round bottom flask with an attached reflux condenser and the flask was evacuated and backfilled three times with argon. Then, nickel chloride hexahydrate (NiCl₂ . 6 H₂O, 238 mg, 1.00 mmol, 1.00 equiv) and the requisite amount of support material (carbon, silica gel, silica fumed, SBA-15, zirconia, titania, alumina, or hydroxyapatite) to prepare supported metal phosphide with the targeted metal content was added. The necks of the flask were sealed again with rubber septa and the round bottom flask was evacuated and back-filled with argon before triphenylphosphite (P(OPh)₃, 3.103 g, 2.62 mL, 10.0 mmol, 10.0 equiv), hexadecylamine (2.42 g, 10.0 mmol, 10.0 equiv) and 1-octadecene (10.0 mL, 31.2 mmol) were added. The resulting suspension was heated to 150 °C with a heating rate of 10 °C · min⁻¹ under Ar flow and constant stirring, then maintained at 150 °C for one hour in order to dissolve the nickel precursor, and remove any traces of low boiling point impurities, acetone and water. Subsequently, the reaction mixture was heated to 300 °C with a heating rate of 10 °C · min⁻¹ and stirred at 300 °C for 2 h during which time the color of the solution changed from yellow to black. The reaction mixture was then allowed to cool to 50 °C, and stirred at this temperature for 8 - 12 h. The black suspension was transferred to a 45 mL centrifuge tube and diluted with acetone (30 mL) before being subjected to centrifugation (4500 rpm for 10 min). The supernatant was discarded and 40 mL of a 3:1 v:v solution of chloroform and acetone was added, the suspension stirred for 30 minutes before the stir bar was removed and the suspension subjected to centrifugation (4500 rpm for 10 min). The washing sequence with chloroform and acetone was repeated twice more, and after the supernatant has been discarded for the last time, the solid remaining in the centrifugation tube was left to air dry for 1 hour. The resulting black solid was then transferred into a small vial and dried under dynamic vacuum at room temperature to yield Ni₂P/support₁₋ₛₜₑₚ.

### Procedure for the synthesis of Co_{2P/}support₁₌ₛₜₑₚ

A stir bar was added to 250 mL three-neck round bottom flask with an attached reflux condenser and the flask was evacuated and backfilled three times with argon. Then, cobalt acetylacetonate (Co(acac)₂, 257 mg, 1.00 mmol, 1.00 equiv) and the requisite amount of support material (carbon, silica gel, silica fumed, SBA-15, zirconia, titania, alumina, or hydroxyapatite) to prepare supported metal phosphide with the targeted metal content was added. The necks of the flask were sealed again with rubber septa and the round bottom flask was evacuated and back-filled with argon before triphenylphosphite (P(OPh)₃, 3.103 g, 2.62 mL, 10.0 mmol, 10.0 equiv), hexadecylamine (2.42 g, 10.0 mmol, 10.0 equiv) and 1-octadecene (10.0 mL, 31.2 mmol) were added. The resulting suspension was heated to 150 °C with a heating rate of 10 °C · min⁻¹ under Ar flow and constant stirring, then maintained at 150 °C for one hour in order to dissolve the cobalt precursor, and remove any traces of low boiling point impurities, acetone and water. Subsequently, the reaction mixture was heated to 300 °C with a heating rate of 10 °C · min⁻¹ and stirred at 300 °C for 2 h during which time the color of the solution changed from dark blue to black. The reaction mixture was then allowed to cool to 50 °C, and stirred at this temperature for 8 - 12 h. The black suspension was transferred to a 45 mL centrifuge tube and diluted with acetone (30 mL) before being subjected to centrifugation (4500 rpm for 10 min). The supernatant was discarded and 40 mL of a 3:1 v:v solution of chloroform and acetone was added, the suspension stirred for 30 minutes before the stir bar was removed and the suspension subjected to centrifugation (4500 rpm for 10 min). The washing sequence with chloroform and acetone was repeated twice more, and after the supernatant has been discarded for the last time, the solid remaining in the centrifugation tube was left to air dry for 1 hour. The resulting black solid was then transferred into a small vial and dried under dynamic vacuum at room temperature to yield Co₂P/support₁₋ₛₜₑₚ.

### Procedure for the synthesis of Ni₂P/support₂₋ₛₜₑₚ

A stir bar was added to 250 mL three-neck round bottom flask with an attached reflux condenser and the flask was evacuated and backfilled three times with argon. Then, nickel chloride hexahydrate (NiCl₂.6H₂O, 238 mg, 1.00 mmol, 1.00 equiv) was added. The necks of the flask were sealed again with rubber septa and the round bottom flask was evacuated and back-filled with argon before triphenylphosphite (P(OPh)₃, 3.103 g, 2.62 mL, 10.0 mmol, 10.0 equiv), hexadecylamine (2.42 g, 10.0 mmol, 10.0 equiv) and 1-octadecene (10.0 mL, 31.2 mmol) were added. The resulting suspension was heated to 150 °C with a heating rate of 10 °C · min⁻¹ under Ar flow and constant stirring, then maintained at 150 °C for one hour in order to dissolve the nickel precursor, and remove any traces of low boiling point impurities, acetone and water. Subsequently, the reaction mixture was heated to 300 °C with a heating rate of 10 °C · min⁻¹ and stirred at 300 °C for 2 h during which time the color of the solution changed from yellow to black. The reaction mixture was then allowed to cool to 50 °C, before the requisite amount of support material (carbon, silica gel, silica fumed, SBA-15, zirconia, titania, alumina, or hydroxyapatite) to prepare supported metal phosphide with the targeted metal content was added, and the resulting suspension was allowed to stir at 50 °C for 8 - 12 h. Subsequently, the black suspension was transferred to a 45 mL centrifuge tube and diluted with acetone (30 mL) before being subjected to centrifugation (4500 rpm for 10 min). The supernatant was discarded and 40 mL of a 3:1 v:v solution of chloroform and acetone was added, the suspension stirred for 30 minutes before the stir bar was removed and the suspension subjected to centrifugation (4500 rpm for 10 min). The washing sequence with chloroform and acetone was repeated twice more, and after the supernatant has been discarded for the last time, the solid remaining in the centrifugation tube was left to air dry for 1 hour. The resulting black solid was then transferred into a small vial and dried under dynamic vacuum at room temperature to yield Ni₂P/support₂₋ₛₜₑₚ.

As shown above, the inventors have demonstrated that an expedient 1-step procedure is compatible with a wide range of different support materials and delivers phase-pure supported nanoparticles with average diameters of ~3 nm and excellent dispersion. Furthermore, Ni₂P/Al₂O₃ prepared in a single step from cheap, air-stable and non-toxic materials delivers a catalytic performance that is on par with the palladium-based Lindlar catalyst. A catalyst loading corresponding to 50 µg of Ni is sufficient to reduce 12.8 mL 1-hexyne, reaching a TON > 121,000. No glove box is required for the synthesis or use of Ni₂P/Al₂O_{3 1-step}, and 85% of the initial performance of the catalyst was retained when the material was stored under air for 1.5 years. The inventors attribute the performance of Ni₂P/Al₂O_{3 1-step} in catalysis compared with materials obtained via the 2-step or 3-step synthesis protocol to a combination of increased dispersion and increased stabilization of metallic nickel on the catalyst surface against oxidation. For alumina, and to a lesser extent SBA-15, the 1-step synthesis procedure led to the adsorption of hexadecylamine on the support surface and phosphate esters on the nanoparticle surface, which increased the stability of the metallic surface against air oxidation without hampering catalytic performance. To demonstrate that 1-step synthesis of highly dispersed supported metal phosphides is not restricted to Ni₂P, the inventors also prepared Co₂P/Al₂O₃ and Co₂P/TiO₂ as well as the supported mixed metal phosphide NiCoP/TiO₂, for which an average nanoparticle diameter of 1.7 nm was determined.

In addition to a general route towards low-nanometer, highly dispersed, supported metal phosphides that is safe, fast and cheap, the inventors thus outline how an appropriate surface ligand tunes metal phosphides for applications in which air exclusion is impossible or impractical.

## Claims

1. Process for preparing a particulate metal phosphide on a support wherein, in a first step, a metal salt, selected from salts of an inorganic or organic acid or mixtures thereof, of a metal selected from Fe, Cu, Co, Ni, Mo, Ru or mixtures thereof, is heated under a protective gas atmosphere together with a phosphorous compound in the presence of a support material selected from carbon, silicon dioxide, zircon dioxide, titan dioxide, aluminum oxide and hydrated forms thereof as well as mixtures thereof, hydroxyapatite or mixtures thereof and in the presence of a C₁₀₋₂₂ hydrocarbon amine compound and an aliphatic, optionally unsaturated, hydrocarbon solvent, having a boiling point at 1 bar in the range of 250°C to 400°C, preferably with a heating rate of 10°C / min, to an elevated temperature of between 100°C to 200°C and kept at this temperature for a period of time of 30 min to 120 min, and then further heated, preferably with a heating rate of 5°C to 20°C / min, preferably 10°C / min, to an elevated temperature of between 200°C and 300°C and kept at this temperature for a period of time of 60 min to 180 min, cooled to a temperature range of 40°C to 80°C and kept, preferably under stirring, at this temperature for 8 to 12 hours, and wherein, in a further step, the precipitate is separated from the solvent and optionally washed with an non-polar organic solvent whereby the desired particulate metal phosphide on said support is obtained.

2. Process for preparing a particulate metal phosphide on a support according to claim 1, wherein the phosphorous compound is selected from triarylphosphites, trialkylphosphites, diaryl alkylphosphites, dialkyl aryl phosphites, triarylphosphines or mixtures thereof, and is preferably triphenylphosphite.

3. Process for preparing a particulate metal phosphide on a support according to claim 1 or 2, wherein the metal salt is selected from salts of an inorganic or organic acid or mixtures thereof, said acid being selected from hydrochloric acid, nitric acid, acetic acid, sulfuric acid, hydrobromic acid, acetylacetone or mixtures thereof.

4. Process for preparing a particulate metal phosphide on a support according to any one of the proceeding claims, wherein the C₁₀₋₂₂ hydrocarbon amine is selected from hexadecylamine, oleylamine, octadecylamine, decylamine, dodecylamine, tetradecylamine or mixtures thereof.

5. Process for preparing a particulate metal phosphide on a support according to any one of the proceeding claims, wherein the aliphatic, optionally unsaturated, hydrocarbon solvent, having a boiling point at 1 bar in the range of 250°C to 400°C is selected from C₁₆ to C₂₀ aliphatic, optionally unsaturated, hydrocarbons, preferably selected from 1-octadecene, 1-tetradecene, octadecan, eicosan or mixtures thereof.

6. Particulate metal phosphide on a support, obtainable according to the process as claimed in any one of the claims 1 to 5.

7. Use of the particulate metal phosphide on a support as a catalyst in organic synthesis.
